# EUROPÄISCHE PATENTSCHRIFT

(11) **EP 1 217 925 B1**
(45) Veröffentlichungstag und Bekanntmachung des Hinweises auf die Patenterteilung: **04.02.2004**
(21) Anmeldenummer: 00992191.7
(22) Anmeldetag: 05.10.2000
(51) Int. Cl.: A47J 31/40

(54) **ESPRESSOMASCHINE MIT EINEM IN EINEM BRÜHZYLINDER VERSCHIEBBAREN BRÜHKOLBEN**
ESPRESSO MACHINE WITH AN INFUSION PISTON DISPLACEABLE IN AN INFUSION CYLINDER
MACHINE A CAFE EXPRESS DOTEE D'UN PISTON D'EXTRACTION COULISSANT DANS UN CYLINDRE DE D'EXTRACTION

(30) Priorität: 06.10.1999 DE 29917586 U
(43) Veröffentlichungstag der Anmeldung: 03.07.2002
(73) Patentinhaber: Eugster/Frismag AG, 8590 Romanshorn (CH)
(72) Erfinder: EUGSTER, Arthur, CH-8590 Romanshorn (CH)
(74) Vertreter: Schubert, Siegmar, Dipl.-Ing.
(86) Internationale Anmeldenummer: PCT/EP2000/009724
(87) Internationale Veröffentlichungsnummer: WO 2001/024670

(56) Entgegenhaltungen:
- EP-A- 0 564 399
- EP-A- 0 756 842
- EP-A- 0 885 582
- EP-A- 0 948 927

## Beschreibung

Die Erfindung betrifft eine Espressomaschine mit einem in einem Brühzylinder verschiebbaren Brühkolben nach dem Oberbegriff des Anspruchs 1.

Bei einer bekannten Espressomaschine, insbesondere für den Hausgebrauch, steht der Brühkolben mit einer motorischen Betätigungseinrichtung in kraftschlüssiger Verbindung, und zwar über einen Stab, der in einer senkrecht verschiebbaren Hülse mit einem Rohrabschnitt gelagert ist (EP 0 270 141 A1). Der Rohrabschnitt steht unter anderem über eine Zugfeder mit dem Stift einer Nockenscheibe in Verbindung, die durch einen Getriebemotor angetrieben wird. Die Zugfeder ist so angeordnet und bemessen, daß das in den Brühraum des Brühzylinders eingefüllte Kaffeepulver im wesentlichen konstant und unabhängig von der Pulvermenge durch den Getriebemotor komprimiert wird. In den Brühzylinder mündet ein Brühwassereinlaß, der mit dem Brühraum in brühwasserleitender Verbindung steht, und zwar über ein Filter mit einer ringförmigen Öffnung, die durch ein verschiebbares Verschlußstück zur Freigabe eines Durchgangs zusammenwirkt. Der Brühkolben soll bei dem Druck des in den Brühzylinder bzw. Brühraum einströmenden Brühwassers in seiner das Kaffeemehl komprimierenden Stellung festgehalten werden. Im Bereich des Bodens des Brühzylinders bzw. der hierin gebildeten Brühkammer ist ein Auslaufsieb angeordnet, welches zum Ausschub des nach dem Brühvorgang gebildeten Kaffeemehlkuchens anhebbar ist.

Die Verdichtung des Kaffeemehls wird bei derartigen Espressomaschinen zur Erzielung einer guten, die Qualität des Espressos mitbestimmenden Crema vorgesehen, da das verdichtete Kaffeemehl für das Brühwasser eine Drosselstrecke bildet und dadurch im Brühzylinder ein Brühdruck erzeugt wird, der die ätherischen Öle aus dem Kaffeemehl preßt, welche die Crema bilden.

Es ist weiter bekannt, die Qualität des gebrühten Espressos dadurch zu verbessern, daß in der Brühkammer erst ein gewisser Druck aufgebaut wird, ehe der fertige Espresso aus der Brühkammer ausfließen kann. Dabei wirkt der verhältnismäßig hohe Brühdruck des in die Brühkammer einströmenden Brühwassers vor dem eigentlichen Auslaugen des Kaffeemehls auf das durchfeuchtete Kaffeemehl ein. Um diesen Brühdruck zu erreichen, ist ein den Brühraum stromabwärts verschließendes Cremaventil bekannt, welches erst bei Erreichen eines Soll-Öffnungsdrucks den Brühraum zum Ausfluß des fertigen Espressos öffnet (zum Beispiel EP 0 756 842 B1 ). Bei dieser bekannten Espressomaschine ist im übrigen eine Bauweise mit einem gehäusefesten Unterteil und einem gegenüber diesem auf einer Kreisbahn von 360° drehbaren Karussell als Oberteil mit einer Steuermechanik bekannt, um einfach und trotzdem sehr betriebssicher Espresso in sehr guter Qualität zu erzeugen. In dieser Espressomaschine ist ein Brühkolben als Teil des Oberteils in dessen einer Drehstellung axial zu einem Brühraum bzw. einer Brühkammer ausgerichtet, um in diese abgesenkt oder aus dieser angehoben werden zu können. Im einzelnen wird nach Einfüllen des Kaffeemehls der Brühkolben mit einem Brühsieb in der Brühkammer in die Brühposition abgesenkt, bis der auf das Kaffeemehl treffende Brühkolben das Kaffeemehl verdichtet hat. Dabei werden Rastelemente wirksam, die mit einem Absenkhebel zusammenwirken und dadurch die Stellung des Brühkolbens vor und während der Einleitung des Brühwassers durch die Löcher des Hubkolbens in die Brühkammer fixieren. Die Rastelemente umfassen mehrere Rastfallen, um ein Verdichten unterschiedlicher Kaffeemengen zu ermöglichen. Über dem Boden der Brühkammer ist ein Hubkolben angeordnet, der zum Durchlaß des Brühwassers von dem in dem Boden eingelassenen Brühwasserstutzen in den Brühraum gelocht ist. Der Hubkolben ist verschiebbar gelagert und durch die Drehbewegung des Oberteils auf- und abwärts bewegbar. Dadurch kann der Hubkolben nach dem Brühen des Espressos beim Drehen des Oberteils in eine andere Winkelstellung bis zum oberen Rand der Brühkammer angehoben werden. Von dort kann der nach dem Brühvorgang verbleibende Kaffeemehlkuchen mit einem Räumelement seitlich abgeschoben werden. Zuvor wird durch den engen Einschluß des Kaffeemehls zwischen dem gelochten Hubkolben und dem Brühsieb auch erreicht, daß nach dem Brühvorgang nur wenig Restwasser in dem Kaffeemehlkuchen verbleibt, der auch als Kaffeesumpf bezeichnet wird.

Die oben genannten bekannten Espressomaschinen können jedoch den Nachteil haben, daß bei hohem, entweder durch das stark verdichtete Kaffeemehl oder den durch das Cremaventil gebildeten Gegendruck nicht alle Zonen des Kaffeemehls ausreichend durchfeuchtet werden und damit in diesen Bereichen die ätherischen Öle nur unzureichend ausgepreßt werden. Bei den Espressomaschinen mit Cremaventil kann als nachteilig hinzukommen, daß bei Erreichen des Soll-Öffnungsdrucks und dementsprechend Öffnen des Cremaventils ein plötzlicher kanalartiger Durchbruch des Brühwassers auf dem kürzesten Weg in Richtung des Espressoauslaufs erfolgt, wobei Zonen des Kaffeemehls nur unzureichend ausgelaugt werden. Aber auch bei verhältnismäßig niedrigen Drücken und bei Abwesenheit eines Cremaventils können sich in dem Kaffeemehl unerwünschte Durchbruchkanäle des Brühwassers bilden.

Eine bekannte Espressomaschine der eingangs genannten Gattung weist kein Cremaventil auf, aber einen in der Brühkammer so angeordneten federbelasteten Brühkolben, daß dieser durch das unter Druck stehende Brühwasser entgegen der Rückstellkraft der Feder zu einem Boden einer Brühkammer verschoben wird, damit einen Brühraum erweitert und schließlich am Boden einen Durchgang zu einem Espressoauslauf verschließt (EP 0 948 927 A1). Der Brühkolben trägt auf seiner Oberseite ein Filter, welches das Kaffeemehl aufnimmt, und weist unten eine Kolbenstange auf. Im einzelnen sollen Durchgangskanäle in dem Brühkolben durch den Boden, insbesondere eine Erhebung des Bodens, gegenüber dem Espressolauslauf praktisch abgeschlossen sein, wenn der Brühkolben auf dem Boden bzw. der Erhebung des Bodens aufsitzt. Damit soll eine vollständige Durchfeuchtung des Kaffeemehls während der Brühphase erreicht werden. Jedoch wird bei Einlass des Brühwassers in die Brühkammer diese nicht sofort verschlossen, sondern erst nach so großem Druckaufbau, daß der Brühkolben weitestgehend auf den Boden gedrückt ist. Zumindest bis dahin kann in unerwünschter Weise Brühwasser aus dem Espressoauslauf austreten. Auch anschließend ist die Dichtheit wegen unvermeidbarer Sedimente aus dem Kaffeekuchen und des inkompressiblen Wassers zwischen Unterseite des Brühkolbens und dem Boden der Brühkammer nicht gewährleistet. Deswegen darf die Rückstellkraft der Feder nicht sehr groß gewählt sein, die nach Beendigung der Brühphase, wenn der Zulauf heißen Brühwassers unter Druck abgestellt wird, den Brühkolben unter Einschluß des Kaffeekuchens zurückstellt.

Der vorliegenden Erfindung liegt daher die Aufgabe zugrunde, eine Espressomaschine der eingangs genannten Gattung zu schaffen, bei der unter Vermeidung der obigen Nachteile eine gleichmäßige Durchfeuchtung, Auspressung und Auslaugung aller Zonen des Kaffeemehls im Brühzylinder zuverlässig erfolgen, wodurch eine bestmögliche Nutzung des Kaffeemehls und eine optimierte Crema erreicht werden sollen. Dabei soll auch die Abdichtung der Brühkammer von Beginn des Einlasses des Brühwassers in die Brühkammer bis zum Ende der Brühphase verbessert werden.

Diese Aufgabe wird für eine Espressomaschine der eingangs genannten Gattung mit den in dem kennzeichnenden Teil des Anspruchs 1 angegebenen Merkmalen gelöst.

Mit der erfindungsgemäßen Lösung wird nicht nur erreicht, daß vor dem eigentlichen Brühvorgang das Kaffeemehl durch den Brühkolben verdichtet ist, wobei der Brühkolben über einen Wasserverteiler auf dem Kaffeemehl aufliegen kann. Diese Kompressionsstellung des Brühkolbens vor Beginn des Brühvorgangs wird auch erste Stellung bezeichnet. Dabei ist der Brühraum durch den Brühkolben und stromabwärts durch ein Cremaventil druck- und wasserdicht verschlossen. Die Feder ist so dimensioniert, daß der Brühzylinder durch den Druck des in den Brühraum einströmenden Brühwassers entgegen der Federkraft dieser Feder bis in eine zweite Stellung bewegt wird, bei der das Volumen des Brühraums bis zu einem vorgegebenen maximalen Wert vergrößert ist, so daß in dem Kaffeemehl in dem sich erweiternden Brühraum keine lokalen Durchbrüche für das Brühwasser auftreten, sondern daß das Kaffeemehl infolge seiner Beweglichkeit, insbesondere seiner Verwirbelung in einem schwimmenden Aufguß gleichmäßig durchfeuchtet, ausgepreßt und ausgelaugt wird, bevor das Cremaventil bei Erreichen dessen Soll-Öffnungsdrucks öffnet. Dann wird der Brühkolben durch die in der Feder gespeicherte Energie selbstätig wieder zu der ersten Stellung hin bewegt, so daß der Kaffeesumpf bzw. Kaffeemehlkuchen nach Beendigung des Brühvorgangs in gewünschter Weise trocken ist. - Dabei werden keine aktiven zusätzlichen Steuerungselemente zur Steuerung der Bewegung des Brühkolbens zwischen der ersten Stellung (Kompressionsstellung) in die zweite Stellung und zurück in die erste Stellung vor Aushub des Kaffeemehlkuchens benötigt.

Diese Funktion des Brühkolbens ergibt sich aus der Anordnung und Dimensionierung der Mittel, die eine Kraft auf den Brühkolben während des Brühvorgangs ausüben, also des Brühdrucks in dem Brühraum, der wirksamen Brühkolbenfläche, auf die der Druck einwirkt, der Feder sowie gegebenenfalls weiterer Elemente, welche die an dem Brühkolben angreifenden Kräfte beeinflussen. Zur selbsttätigen Verschiebung des Brühkolbens trägt das Cremaventil bei, welches die maximale Verstellung des Brühkolbens und damit Erweiterung des Brühraums bis zum Erreichen seines Soll-Öffnungsdruckes mitbestimmt. Somit sind mechanische Anschläge oder andere zusätzliche Mittel zur Begrenzung des Brühkolbenhubs nicht notwendig. Der Soll-Öffnungsdruck kann beispielsweise auf ca. 6 bar eingestellt sein.

Mit Anspruch 2 ist eine besonders kompakte, zuverlässige und konstruktiv unkomplizierte Anordnung einer Druckfeder, die auf den Brühkolben einwirkt, angegeben.

Gemäß Anspruch 3 läßt sich die gezielte selbsttätige Verschiebung des Brühkolbens in dem Brühzylinder während des Brühvorgangs auch unkompliziert bei Espressomaschinen der Bauart einfügen, die ein gehäusefestes Unterteil und ein gegenüber diesem auf einer Kreisbahn von 360° drehbares Karussell als Oberteil aufweist, wobei der Brühkolben als Teil des Oberteils in einer Winkellage des Oberteils mit einem Absenkhebel in den Brühraum absenkbar und aus diesem anhebbar ist, wobei durch die Drehbewegung des Oberteils eine Auf- und Abwärtsbewegung eines Hubkolbens mit Lochboden zwangsgesteuert ist, der in der Brühkammer in dem Unterteil bis zu dem oberen Rand der Brühkammer anhebbar ist, von wo ein Kaffeemehlkuchen seitlich mit einem Räumelement abschiebbar ist. Diese Bauart ist im einzelnen in der oben genannten EP 0 756 842 B1 dargestellt. Damit können die Vorteile einer unkomplizierten betriebssicheren Steuermechanik genutzt werden, wobei zur Brühkolbenbewegung während des Brühvorgangs keine Erweiterung dieser Steuermechanik notwendig ist.

Ein anderes Ausführungsbeispiel der Erfindung wird im folgenden anhand einer Zeichnung mit einer Figur erläutert. Es zeigt:

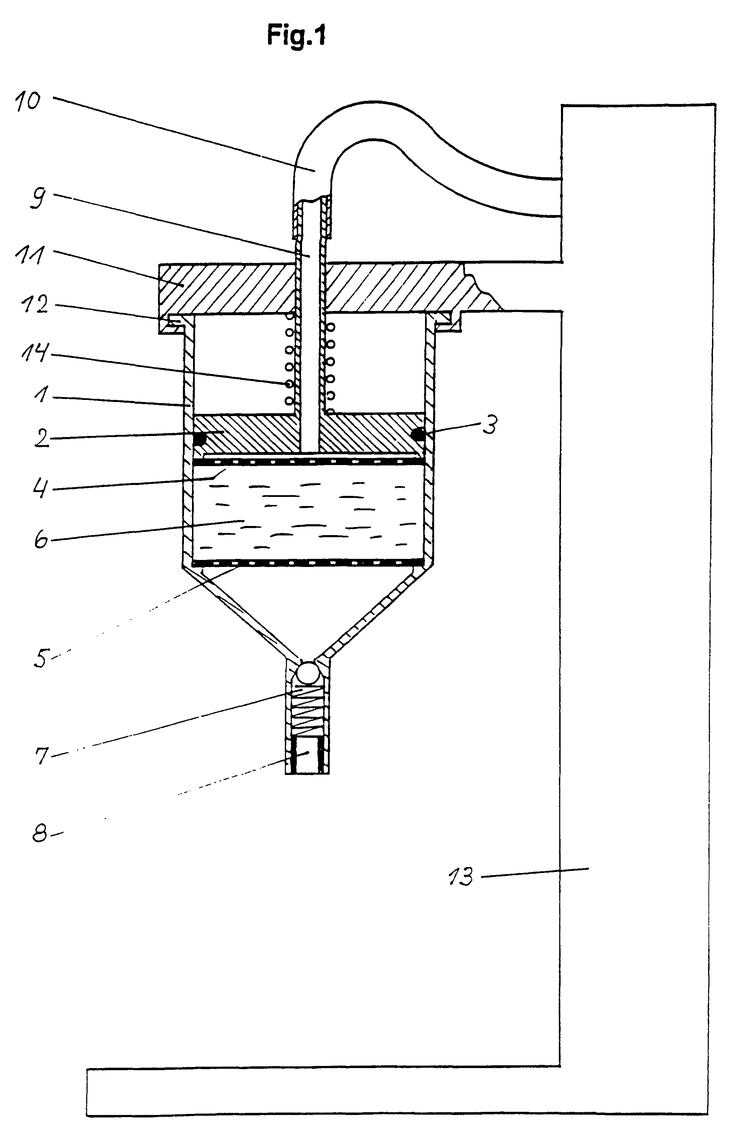

- Figur 1: einen Längsschnitt durch einen Teil einer Espressomaschine, in der stark vereinfacht ein Brühkopf im Längsschnitt dargestellt ist.

In Fig. 1 ist mit 1 ein Brühzylinder bezeichnet, in dem ein Brühkolben 2 verschiebbar gelagert ist. Der Brühkolben 2 ist gegenüber einer Innenwand des Brühzylinders 1 durch eine Kolbendichtung 3 abgedichtet. Auf einer Unterseite des Brühkolbens 3 befindet sich ein Wasserverteiler 4, der als Sieb ausgebildet sein kann und mit dem Brühkolben 2 beweglich ist. Demgegenüber liegt in einem unteren Teil des Brühzylinders 1 ein Auslaufsieb 5. Ein Brühraum 6 variablen Volumens ist durch die Unterseite des Brühkolbens mit verschiebbarem Wasserverteiler 4, das Auslaufsieb und den Innenwandmantelabschnitt des Brühzylinders zwischen dem Brühkolben 2 bzw. Wasserverteiler 4 und dem Auslaufsieb definiert.

Unter dem Auslaufsieb ist ein Cremaventil 7 mit einem Soll-Öffnungsdruck von ca. 6 bar in einem Strömungsweg stromabwärts des Brühraums 6 zu einem Espressoauslauf 8 angeordnet. Das Auslaufsieb 5 kann als Lochboden realisiert sein.

Ein rohrförmiger Brühwasserzulauf 9 steht mit einem flexiblen Wasserschlauch 10 in Verbindung, der zu einer nicht dargestellten Brühwasserpumpe führt. Der Brühwasserzulauf ist als rohrförmige Kolbenstange, die in einem Brühzylinderträger 11 verschiebbar gelagert ist, ausgebildet und geht in eine Bohrung in dem Brühkolben 2 über, die mit dem Brühraum 6 unter dem Wasserverteiler 4 in brühwasserleitender Verbindung steht.

Zwischen einem nicht bezeichneten Oberteil des Brühkolbens 2 und einer ebenfalls nicht bezeichneten Unterseite des Brühzylinderträgers 11 stützt sich eine Druckfeder 14 ab.

Die Druckfeder 14 ist so dimensioniert, daß sie in der in Fig. 1 dargestellten ersten Stellung des Brühwasserkolbens bei Normaldruck in dem Brühwasserzulauf das in den Brühraum eingefüllte Kaffeemehl in einem gewünschten Maße komprimiert, jedoch, wenn zu Beginn des Brühvorgangs Brühwasser durch den flexiblen Wasserschlauch 10 und den Brühwasserzulauf 9 durch den Wasserverteiler 4 in den Brühraum 6 gedrückt wird, unter dem Druck des Brühwassers nach oben bis in eine vorbestimmte zweite Stellung zurückweicht und demgemäß das Volumen des Brühraums 6 unter Anhebung des Brühkolbens 2 mit dem Wasserverteiler 4 in einem gewünschten Maße vergrößert. Dieses Anheben des Brühkolbens 2 entgegen der Federkraft der Druckfeder 14 erfolgt solange, bis der Soll- Öffnungsdruck des Cremaventils 7 erreicht ist. Bis dahin kann sich das Kaffeemehl in dem sich erweiternden Brühraum 6 unter Verwirbelung durch den Druck des in den Brühraum 6 einströmenden Brühwassers ausbreiten, um gleichmäßig durchfeuchtet, anschließend ausgepreßt und ausgelaugt zu werden. Die zweite Stellung des Brühkolbens 2, die erreicht wird, bis der Innendruck in dem Druckraum bis zu dem Sollöffnungdsdrucks des Cremaventils 7 angestiegen ist, kann beispielsweise durch die Charakteristik der Druckfeder 14 in Relation zu der wirksamen Druckfläche an der Unterseite des Brühkolbens 2 definiert sein oder durch einen mechanischen Anschlag.

Wenn der Soll-Öffnungsdruck des Cremaventils in dem Brühraum 6 erreicht ist, bricht dort der Innendruck zusammen und die Druckfeder 14 drückt über den Brühkolben 2 und den Wasserverteiler 6 das ausgelaugte Kaffeemehl in dem sich verkleinernden Druckraum 6 zusammen, bis praktisch wieder die erste Stellung des Brühkolbens 2 erreicht ist.

In dem Ausführungsbeispiel kann der mittels eines Bajonettverschlusses 12 an dem Brühzylinderträger 11 angebrachte Brühzylinder 1 von diesem abgenommen werden, wobei der Brühkolben 2 mit Wasserverteiler 4 und Druckfeder 14 an dem Brühzylinderträger 11 verbleiben. In den abgenommenen Brühzylinder 1 kann das Kaffeemehl vor der Zubereitung des Espressos eingefüllt werden und nach dem Brühvorgang kann der Kaffeemehlkuchen aus dem wiederum abgenommenen Brühzylinder 1 entfernt werden.

### Teilagenda

- 1: Brühzylinder
- 2: Brühkolben
- 3: Kolbendichtung
- 4: Wasserverteiler
- 5: Auslaufsieb (Lochboden)
- 6: Brühraum
- 7: Cremaventil
- 8: Espressoauslauf
- 9: Brühwasserzulauf
- 10: Flexibler Wasserschlauch
- 11: Brühzylinderträger
- 12: Bajonettverschluß
- 13: Espressomaschine
- 14: Druckfeder

## Patentansprüche

1. Espressomaschine mit einem in einem Brühzylinder verschiebbaren Brühkolben, der über eine Feder mit einer Betätigungseinrichtung des Brühkolbens in kraftschlüssiger Verbindung steht und der in einer ersten Stellung in einem Brühraum des Brühzylinders Kaffeepulver eng zwischen sich und einem Auslaufsieb einschließt, wobei mit dem Brühraum ein Druckwasserzulauf in Verbindung steht, wobei der Brühkolben (2) durch den Druck des in den Brühzylinder (1) einströmenden Brühwassers selbsttätig entgegen einer Federkraft der Feder bis zu einer zweiten vorgegebenen Stellung verschiebbar ist und dadurch den Brühraum erweitert, wonach bei Druckabfall in dem Brühraum (6) der Brühkolben (2) durch die Feder selbsttätig in Richtung auf die erste Stellung rückstellbar ist,
**dadurch gekennzeichnet,**
**daß** der Brühkolben (2) im wesentlichen proportional zu einem durch das einströmende Brühwasser verursachten Druckanstieg in dem Brühraum (6) bis zu einem Soll-Öffnungsdruck eines den Brühraum (6) stromabwärts verschließenden Cremaventils (7) bis in die zweite Stellung verschiebbar ist.

2. Espressomaschine nach Anspruch 1,
**dadurch gekennzeichnet,**
**daß** die Feder eine Druckfeder (14) ist, die koaxial zu dem Brühkolben (2) zwischen diesem und einem gegenüber dem Brühzylinder (1) feststehenden Element oberhalb des Brühzylinders (1) angeordnet ist.

3. Espressomaschine nach Anspruch 1 oder 2,
**dadurch gekennzeichnet,**
**daß** die Espressomaschine ein gehäusefestes Unterteil und ein gegenüber diesem auf einer Kreisbahn von 360° drehbares Karussell als Oberteil aufweist, daß der Brühkolben als Teil des Oberteils in einer Winkellage des Oberteils mit einem Absenkhebel in den Brühraum absenkbar und aus diesem anhebbar ist und daß durch die Drehbewegung des Oberteils eine Auf- und Abbewegung eines Hubkolbens mit Lochboden zwangsgesteuert ist, der in der Brühkammer in dem Unterteil bis zum oberen Rand der Brühkammer anhebbar ist, von wo ein Kaffeemehlkuchen seitlich mit einem Räumelement abschiebbar ist.

## Claims

1. Espresso machine with an infusion piston that can be displaced within an infusion cylinder, the infusion piston being in friction-force connection via a spring with an actuation device thereof and, in a first position, enclosing ground coffee tightly in an infusion chamber of the infusion cylinder between itself and an outlet sieve, with a pressurised water feed connected to the infusion chamber such that under the pressure produced by the flow of infusion water into the infusion cylinder (1) the infusion piston (2) can move automatically against the spring force of the spring as far as a second, predetermined position, thereby enlarging the infusion chamber, after which, when the pressure in the infusion chamber (6) falls, the infusion piston (2) can automatically be returned by the spring in the direction towards its first position,
**characterised in that**
essentially in proportion to a pressure increase in the infusion chamber (6) produced by the inflowing infusion water up to a nominal opening pressure of a frothing valve (7) which closes the infusion chamber (6) in the downstream direction, the infusion piston (2) can be displaced as far as the second position.

2. Espresso machine according to Claim 1,
**characterised in that**
the spring is a compression spring (14) arranged coaxially relative to the infusion piston (2) between the latter and an element fixed relative to the infusion cylinder (1) above the infusion cylinder (1).

3. Espresso machine according to Claims 1 or 2,
**characterised in that**
the espresso machine comprises a lower portion fixed to the housing and an upper portion consisting of a carousel that can turn relative to the lower portion on a circular path of 360°, the infusion piston is part of the upper portion and, in an angular position of the upper portion, can be lowered by means of a lowering lever into the infusion chamber and raised out of it, and the rotation movement of the upper portion controls the upward and downward movement of a reciprocating piston with a perforated bottom, which can be raised within the infusion chamber in the lower portion as far as the upper edge of the infusion chamber, from which a cake of ground coffee can be pushed out sideways by a clearing element.

## Revendications

1. Machine à express comprenant un piston de percolation déplaçable dans un cylindre de percolation, qui est en liaison forcée, via un ressort, avec un dispositif de commande du piston de percolation et confine étroitement, dans une première position, dans un espace de percolation du cylindre de percolation, du café en poudre entre lui et un filtre de sortie, une alimentation en eau sous pression étant en liaison avec l'espace de percolation, le piston de percolation (2) étant déplaçable automatiquement par la pression de l'eau de percolation s'écoulant dans le cylindre de percolation (1) à l'encontre de la force du ressort jusqu'à une seconde position prédéterminée en augmentant ainsi l'espace de percolation, après quoi, du fait de la chute de pression dans l'espace de percolation (6), le piston de percolation (2) peut être rappelé par le ressort automatiquement dans la direction de la première position,
**caractérisée en ce que** :
le piston de percolation (2) étant déplaçable jusque dans la seconde position sensiblement en proportion avec une augmentation de pression occasionnée par l'arrivée d'eau de percolation dans l'espace de percolation (6) jusqu'à une pression d'ouverture prédéterminée d'une soupape à crème (7) fermant l'espace de percolation (6) en aval.

2. Machine à express selon la revendication 1,
**caractérisée en ce que** :
le ressort est un ressort de compression (14) qui est aménagé coaxialement avec le piston de percolation (2) entre celui-ci et un élément fixe par rapport au cylindre de percolation (1) au-dessus de celui-ci.

3. Machine à express selon la revendication 1 ou 2,
**caractérisée en ce que** :
la machine à express présente une partie inférieure fixe et, comme partie supérieure, un carrousel qui peut tourner par rapport à la partie inférieure selon un cercle de 360°, **en ce que** le piston de percolation peut, en tant que partie de la partie supérieure, être abaissé, dans une position relative de la partie supérieure, dans l'espace de percolation et en être relevé > au moyen d'un levier d'abaissement, et **en ce que**, par mouvement de rotation de la partie supérieure, un déplacement vers le haut et vers est appliqué à force à un piston élévateur avec un fond perforé, qui peut être relevé dans la chambre de percolation de la partie inférieure jusqu'au bord supérieur de la chambre de percolation, d'où un gâteau de café et de lait peut être extrait latéralement par un élément d'évacuation.
